# EUROPÄISCHE PATENTSCHRIFT

(11) **EP 1 015 400 B1**
(45) Veröffentlichungstag und Bekanntmachung des Hinweises auf die Patenterteilung: **05.12.2001**
(21) Anmeldenummer: 98940234.2
(22) Anmeldetag: 15.07.1998
(51) Int. Cl.: C04B 35/622, C04B 35/653, C03B 37/095

(54) **VERFAHREN ZUR HERSTELLUNG VON KERAMISCHEN FASERN, DIE DANACH HERGESTELLTEN KERAMISCHEN FASERN UND DEREN VERWENDUNG**
METHOD FOR PRODUCING CERAMIC FIBERS, THE FIBERS THUS PRODUCED AND THEIR USE
PROCEDE POUR LA PRODUCTION DE FIBRES CERAMIQUES, FIBRES CERAMIQUES PRODUITES SELON CE PROCEDE ET LEUR UTILISATION

(30) Priorität: 18.07.1997 DE 19730996
(43) Veröffentlichungstag der Anmeldung: 05.07.2000
(73) Patentinhaber: Rennebeck, Klaus, 73240 Wendlingen (DE)
(72) Erfinder: Rennebeck, Klaus, 73240 Wendlingen (DE)
(74) Vertreter: Hagemann, Heinrich, Dr.rer.nat., Dipl.-Chem.
(86) Internationale Anmeldenummer: EP9804410
(87) Internationale Veröffentlichungsnummer: WO9903798

(56) Entgegenhaltungen:
- EP-A- 0 047 640
- EP-A- 0 503 655
- US-A- 4 140 507
- US-A- 5 176 729
- US-A- 5 200 370

## Beschreibung

Die Erfindung betrifft ein Verfahren zur Herstellung von keramischen Fasern aus der Schmelze, die danach erhältlichen keramischen Fasern, insbesondere in Form von Mikrohohlfasern, sowie die Verwendung dieser keramischen Fasern.

Die ältere internationale Anmeldung PCT/EP 97/00255 betrifft Mikrohohlfasern aus keramischen Materialien. Diese eignen sich für eine Vielzahl vorteilhafter Anwendungen, so beispielsweise zur Herstellung von Membranen. Molekularsieben, Katalysatorträgern, Filtern und dergleichen. In der älteren Anmeldung wird detailliert ausgeführt, wie diese Mikroholfasern hergestellt werden. Als besonders bevorzugtes Verfahren wird dabei ein Spinnverfahren herausgestellt. Danach wird die Dispersion, die den Vorläufer des keramischen Materials, beispielsweise in Form von Tonmineralien, Metallhydroxiden, gemischten Metallhydroxiden/-oxiden, gemischten Metalloxiden/Metallhalogeniden, Metalloxiden, Metallnitriden, Metallalkoholaten, Feldspäten, Zeolithen oder Böhmiten und ein thermisch entfernbares Bindemittel, beispielsweise Harnstoff, Polyvinylalkohol, Polymerthermoplaststärke (PTS), Wachs, Gelatine, Agar, Eiweiße oder Saccharide, enthält, in einen Aufgabebehälter oder ein Druckgefäß der Spinnvorrichtung gegeben. Die Dispersion wird bei einer Temperatur von etwa 20 bis 400°C durch die Spinnvorrichtung geführt und durch Düsen gepreßt. Die im Bereich der Düsenöffnungen erzeugten Ströme werden mittig durch Kerne und/oder durch Einrichtungen zum Einblasen eines Gases geteilt. Die Ströme werden durch Erwärmen, durch Bestrahlen oder durch Zutritt eines Reaktionspartners zu grünen Mikrohohlfasern verfestigt. Die erhaltenen grünen Mikrohohlfasern werden zu fertigen Mikrohohlfasern gebrannt.

Der oben beschriebene und sich aus der älteren Anmeldung ergebenden Sachverhalt macht deutlich, daß das Verfahren zur Herstellung des Fertigerzeugnisses in Form der Keramikmikrohohlfasern vergleichsweise aufwendig ist, da zunächst ein Grünling hergestellt und dieser einer weiteren Behandlungsmaßnahme zur Herstellung des Fertigerzeugnisses unterzogen werden muß. Eine vereinfachte Verfahrensführung wäre von Vorteil.

In der EP-B1 0 335 602 sind monokristalline Vollfasern offenbart. Des weiteren beschreibt die EP 0 503 655 Vollfasern eines Durchmessers von etwa 3 µm. In der US 5 290 370 sind monokristalline Keramikfasern eines Durchmessers von 8 bis 20 *µ*m offenbart. Die EP 0 047 640 betrifft Hohlfasern, deren Außendurchmesser vorzugsweise unterhalb von 2000 *µ*m und deren Wandstärken zwischen 20 *µ*m und etwa 1000 *µ*m liegen.

Die US 5 176 729 offenbart ein Verfahren zur Herstellung von Fasern, wobei zwischen den inneren und äußeren Wänden des Randbereichs einer Zentrifuge ein Temperaturgradient aufrechterhalten wird.

Demgemäß ist es die Aufgabe der vorliegenden Erfindung, ein besonders einfach durchzuführendes Verfahren zur Herstellung von keramischen Fasern, insbesondere Hohlfasern und Mikrohohlfasern, vorzuschlagen.

Erfindungsgemäß wird diese Aufgabe durch ein Verfahren zur Herstellung von keramischen Fasern aus der Schmelze gelöst, das dadurch gekennzeichnet ist, daß eine Schmelze von Keramikausgangsmaterialien einer Temperatur von mindestens etwa 1150°C auf an sich bekannte Weise durch eine Düse eines Werkzeugs geführt und danach erstarren gelassen wird, wobei mindestens die Teile des Werkzeugs, die der Einwirkung der Schmelze ausgesetzt sind, aus einem Material bestehen, das einen Schmelzpunkt oberhalb etwa 2200°C hat, die erforderliche Festigkeit aufweist und korrosionsbeständig ist und wobei die Temperatur der Schmelze um mindestens etwa 250°C über dem Erstarrungs- bzw. Schmelzpunkt des Keramikausgangsmaterials liegt.

Die oben bezeichnete Mindesttemperatur der Keramikschmelze von 1150°C wird bei bevorzugten Ausgangsmaterialien in Form von oxidischen. nitridischen und/oder karbidischen Materialien regelmäßig weit übertroffen und liegt dann vorzugsweise bei mindestens etwa 1600°C und ganz besonders bevorzugt bei mehr als 1900°C. In einzelnen Fällen sind zur Herstellung der erforderlichen Schmelze sogar Temperaturen von etwa 2200°C einzustellen. Demzufolge hängt die Einstellung der Mindesttemperatur zwangsläufig von den Schmelztemperaturen der Ausgangsmaterialien ab. Die bevorzugten Keramikaus gangsmaterialien der oben angesprochenen Natur, d.h. oxidische, nitridische und/oder karbidische Materialien, sind Aluminiumoxid, Magnesiumoxid, Siliciumoxid. Titandioxid, Berylliumoxid und/oder Zirkoniumoxid. Ein besonders günstiges Ausgangsmaterial ist Aluminiumoxid, insbesondere in Form von Leucosaphir, vorzugsweise in mehliger Form, das eine Schmelztemperatur von etwa 2200°C zeigt.

Um den angesprochenen hohen Temperaturen der Schmelze der verschiedenen Ausgangsmaterialien standzuhalten, müssen mindestens diejenigen Teile des Werkzeugs, die der Einwirkung der Schmelze der Ausgangsmaterialien ausgesetzt sind, aus einem Material bestehen, das einen Schmelzpunkt oberhalb etwa 2200°C hat, die erforderliche Festigkeit aufweist und korrosionsbeständig ist. Vorzugsweise hier verwendete Materialien sind Tantal, Wolfram, Materialien der achten Nebengruppe, Aluminiumnitrid und/oder Zirkoniumdioxid. Zur Herstellung des Werkzeugs können auch Verbundgebilde aus diesen Materialien herangezogen werden. Entscheidend ist der ausreichend hohe Schmelzpunkt, der von den Schmelzen der Ausgangsmaterialien nicht erreicht wird. Darüber hinaus zeigen diese Materialien beim Einsatz des jeweiligen Werkzeugs die erforderlichen Festigkeitseigenschaften und sind auch im Hinblick auf verschiedene Keramikausgangsmaterialien zufriedenstellend korrosionsbeständig. Die Korrosionsbeständigkeit ist insbesondere erforderlich bzw. von Nutzen, wenn aus den Schmelzen korrodierende Gase entstehen. Dies gilt beispielsweise für Ausgangsmaterialien, die Stoffe freisetzen, deren Kondensate Aqua Regia (Königswasser) bilden. Die generellen Rahmenanforderungen der Materialien, aus welchen das Werkzeug besteht, sind wie folgt festzusetzen: Schmelzpunkt oberhalb 2200°C, ausreichende Festigkeit, d.h. (Formen-) Sprödigkeit bei der Durchführung des Verfahrens und vorzugsweise Korrosionsbeständigkeit, insbesondere gegen die angesprochenen Säuren.

Zur Erzeugung vorteilhafter Produkte, insbesondere in Form von keramischen Mikrofasern, hat die Düse des Werkzeugs vorzugsweise einen Durchmesser von etwa 300 bis 7 µm. Durch das Verstrecken der gesponnenen Faser beim Hochschmelztemperaturspinnen nach Austritt aus der Düsenöffnung in der noch plastischen Phase tritt eine Querschnittsverringerung ein. Hierbei ist es vorteilhaft, daß die Temperatur der Schmelze um mindestens etwa 250°C über dem Erstarrungs- bzw. Schmelzpunkt der Keramikmaterialien oder entsprechenden Metallmaterialien liegt. Der Effekt der Querschnittsverringerung tritt dann besonders in Erscheinung, wenn weit oberhalb des eigentlichen Schmelzpunkts bzw. Erstarrungspunkts der Keramikausgangsmaterialien gearbeitet wird. Eine andere technologische Erklärung könnte sein, die Temperatur der Schmelze hierbei so zu wählen, daß deren Enthalpie um etwa 5 bis 40 % über der des eutektischen Gemisches der Keramikausgangsmaterialien liegt. Somit ist es besonders vorteilhaft, sich möglichst weit der Schmelztemperatur der Werkzeugmaterialien zu nähern, ohne diese in ihrer Funktionsfähigkeit zu beeinträchtigen.

Die angesprochenen Keramikausgangsmaterialien werden vor dem eigentlichen Verfahren beispielsweise durch Lichtbogenschmelz- oder Plasmaschmelzverfahren und dergleichen auf die erforderliche Temperatur gebracht. Die so entstandene Schmelze wird in das Werkzeug mit den angesprochenen Düsen überführt.

Das erfindungsgemäße Verfahren läßt sich einerseits so gestalten, daß keramische Vollfasern entstehen. Durch die Dimension der Düse und durch die Regulierung der angesprochenen Bedingungen im Zusammenhang mit der Schmelze lassen sich die gewünschten Durchmesser der Fasern genau einstellen. Andererseits läßt das erfindungsgemäße Verfahren die Herstellung von keramischen Hohlfasern zu. Dabei wird in Flußrichtung der Schmelze in der Düse des Werkzeugs ein koaxialer Lumenbildner zentrisch angeordnet, welcher vorzugsweise über den Rand der Düse herausragt. Dieser Lumenbildner kann ein Kern oder eine Einrichtung zum Einblasen eines Fluids sein, wie Sauerstoff. Stickstoff, Luft, vorzugsweise Edelgase, oder eines anderen Gasgemischs. Das Lumen der Mikrohohlfasern wird dann durch den Lumenbildner erzeugt, wobei aus der Mitte des Lumenbildners das Fluid vorzugsweise nachströmt. Aufgrund der Anordnung des Lumenbildners in der Düse treten Ring- bzw. Profilöffnungen auf, wobei diese Öffnungen so gestaltet sein können, daß eine möglichst große Zahl von Düsen, z.B. mehrere Tausend auf engstem Raum, regelmäßig nebeneinander vorliegen.

Der Lumenbildner kann beispielsweise wie folgt hergestellt werden: Es wird ein kegelförmiger Grünling, z.B. aus Aluminiumnitrid und einen Thermoplasten, in einem "thermoplastischen, endkonturfertigen" Spritzverfahren hergestellt. Mit einem Laser erfolgt eine gezielte Lochbildung in Längsrichtung des Kegels zur Kegelspitze hin. Danach wird der Thermoplast verbrannt, so daß der keramische Lumenbildner entsteht. Wird als Ausgangsmaterial Tantal, Wolfram oder Zirkoniumdioxid verwendet, so sind diese Materialien als Mehl, das mit dem Thermoplasten versetzt ist, zu verarbeiten.

Durch eine ausreichend kleine Düse mit dem angesprochenen Lumenbildner unter Steuerung des weiteren Verfahrens, wie oben angesprochen, läßt sich eine keramische Mikrohohlfaser einer Wandstärke von etwa 0,01 bis 15 µm und eines Außendurchmessers von 0,5 bis 35 µm erhalten.

Ein besonderer Vorteil des erfindungsgemäßen Verfahrens ist darin zu sehen, daß unter den angesprochenen Bedingungen die Herstellung monolithischer keramischer Fasern, seien es Vollfasern oder auch Hohlfasern, möglich ist. Unter "monolithisch" soll ein sogenannter Einkristall verstanden werden, d.h., das Kristallgitter in der festen keramischen Faser hat überall dieselbe Orientierung (sh. Römpps Chemie Lexikon, 8. Aufl., Bd. 2, S. 1151). Das erfindungsgemäße Verfahren gestattet die Herstellung von gleichförmigen bzw. gleichmäßig ausgebildeten Fasern und Hohlfasern, die eine Schwankung von Wandstärke und Außendurchmesser von nicht mehr als 6 % aufweisen. Dies ist in verschiedenen Anwendungsbereichen von besonderem Vorteil, so beispielsweise bei Piezokeramiken und bei keramischen Erzeugnissen, die im Hochvakuum eingesetzt werden sollen.

Die erfindungsgemäß erhaltenen keramischen Fasern, insbesondere Mikrohohlfasern, eignen sich zum Einsatz in vielfältigen Anwendungsgebieten, so z.B. zur Herstellung von Piezokeramiken, Implantaten, temperaturfesten Förderbändern, Metall-Keramik-Compositen oder anderen Verbundwerkstoffen, Armierungen im Bauwesen, Elementen in der Elektrorheologie, Sicherheitsfolien, gasgefüllte Folien, Trägermaterialien, unbrennbaren und unverrottbaren Papierqualitäten, der Matrix von Metallschmelzen oder von dünnwandigen Polymerbauteilen bzw. von Elementen für die Kälteerzeugung, für die Wärmedämmung, für den Lichttransport oder für Dichtungen und Verkleidungen. Als Armierung ist die Mikrohohlfaser als Saphir in einer Mullitmatrix besonders geeignet, aber auch in Scheiben für Hochleistungsbremsen.

### Die Erfindung soll nachfolgend anhand eines Beispiels noch näher erläutert werden:

### Beispiel

Zur Herstellung einer keramischen Mikrohohlfaser wurde eine Spinnvorrichtung der Firma KWH HESCHO GmbH Deutschland, verwendet. Als keramisches Ausgangsmaterial wurde eine keramische Masse aus einem Keramikschmelzprozeß eingesetzt, die durch Schmelzen eines Gemisches aus Al₂O₃ und Alumosilikaten in Pulver/Mehl-Form gewonnen wurde. Die erhaltene pastöse Schmelzmasse wurde in einen Aufgabebehälter der Spinnvorrichtung gefüllt und mit einem Verdichter blasenfrei in den Spinnkopf gedrückt. Die Fördertemperatur betrug 2300°C. Die pastöse Masse wurde durch mehr als 3000 ringförmige Düsenöffnungen des Spinnkompfes ausgeformt. Der Durchmesser der Düsenöffnungen betrug 140 µm. Als Lumenbildner wurden zur Ausbildung von Hohlfasern koaxiale Schikanen eines Durchmessers von 80 µm verwendet. Die erhaltenen Mikrohohlfasern wiesen eine Wandstärke von etwa 5,5 µm und einen Außendurchmesser von etwa 33 µm auf. Die Mikrohohlfasern wurden durch Verstrecken bei Plastizitätstemperatur in ihrem Innen- und Außendurchmesser reduziert. Das Verstrecken erfolgte bei einer Temperatur von 1600°C. Nach dem Verstrecken wurde die 1600°C heiße Mikrofaser auf Spulen abgezogen und dabei durch ein Gemisch aus Luft und Gas auf 640°C abgekühlt und somit kristallisiert und ausreichend ausgehärtet. Die Abzugsgeschwindigkeit betrug etwa 200 m/min. Die gestreckten Mikrohohlfasern hatten eine Wandstärke von etwa 0,9 µm und einen Außendurchmesser von etwa 6 µm.

## Patentansprüche

1. Verfahren zur Herstellung von keramischen Fasern aus der Schmeize, **dadurch gekennzeichnet, daß** eine Schmelze von Keramikausgangsmaterialien einer Temperatur von mindestens etwa 1150°C auf an sich bekannte Weise durch die Düse eines Werkzeugs geführt und danach erstarren gelassen wird, wobei mindestens die Teile des Werkzeugs, die der Einwirkung der Schmelze ausgesetzt sind, aus einem Material bestehen, das einen Schmelzpunkt oberhalb etwa 2200°C hat, die erforderliche Festigkeit aufweist und korrosionsbeständig ist und wobei die Temperatur der Schmelze um mindestens etwa 250°C über dem Erstarrungs- bzw. Schmelzpunkt des Keramikausgangsmaterials liegt.

2. Verfahren nach Anspruch 1, **dadurch gekennzeichnet, daß** mindestens die Teile des Werkzeugs, die der Einwirkung der Schmelze ausgesetzt sind, aus Tantal, Wolfram, Materialien der achten Nebengruppe des Periodensystems, Aluminiumnitrid und/oder Zirkoniumdioxid bestehen.

3. Verfahren nach Anspruch 1 oder 2, **dadurch gekennzeichnet, daß** oxidische, nitridische und/oder karbidische Keramikausgangsmaterialien verwendet werden.

4. Verfahren nach einem der Ansprüche 1 bis 3, **dadurch gekennzeichnet, daß** die Schmelze der Keramikausgangsmaterialien eine Temperatur von mindestens etwa 1600°C, insbesondere mindestens etwa 1900°C aufweist.

5. Verfahren nach Anspruch 3 oder 4, **dadurch gekennzeichnet, daß** als Keramikausgangsmaterial Aluminiumoxid, Magnesiumoxid, Siliciumoxid, Titandioxid, Berylliumoxid und/oder Zirkoniumoxid verwendet werden.

6. Verfahren nach mindestens einem der vorhergehenden Ansprüche, **dadurch gekennzeichnet, daß** die Düse des Werkzeugs zur Herstellung von Hohlfasern einen koaxialen Lumenbildner aufweist.

7. Verfahren nach Anspruch 6, **dadurch gekennzeichnet, daß** Mikrohohlfasern einer Wandstärke von etwa 0,01 bis 15 µm und eines Außendurchmessers von etwa 0,5 bis 35 µm durch entsprechende Dimensionierung der Düse hergestellt werden.

8. Keramische Fasern, erhältlich nach mindestens einem der vorstehenden Ansprüche, **dadurch gekennzeichnet, daß** es Einkristallhohlfasern sind, die eine Wandstärke von etwa 0,01 bis 15 *µ*m und einen Außendurchmesser von etwa 0,5 bis 35 *µ*m aufweisen.

9. Keramische Fasern nach Anspruch 8, **dadurch gekennzeichnet, daß** die Schwankung von Wandstärke und Außendurchmesser nicht mehr als 6% beträgt.

10. Verwendung der keramischen Fasern, insbesondere Mikrohohlfasern, nach mindestens einem der vorhergehenden Ansprüche zur Herstellung von Piezokeramiken, Implantaten, temperaturfesten Förderbändern, Metall-Keramik-Compositen oder anderen Verbundwerkstoffen, Armierungen im Bauwesen, Elementen in der Elektrorheologie, Sicherheitsfolien, gasgefüllten Folien, Trägermaterialien, unbrennbaren und unverrottbaren Papierqualitäten, der Matrix von Metallschmelzen oder Matrix von dünnwandigen Polymerbauteilen bzw. von Elementen für die Kälteerzeugung, für die Wärmedämmung, für den Lichttransport oder für Dichtungen und Verkleidungen.

## Claims

1. Process for producing ceramic fibres from the melt, **characterized in that** a melt of ceramic starting materials at a temperature of at least about 1150°C is conventionally passed through the die of a mould and thereafter left to solidify, wherein at least those parts of the mould which are exposed to the action of the melt consist of a material which has a melting point above about 2200°C and the requisite strength and is corrosion resistant and wherein the temperature of the melt is at least about 250°C above the solidifying or melting point of the ceramic starting material.

2. Process according to Claim 1, **characterized in that** at least those parts of the mould which are exposed to the action of the melt consist of tantalum, tungsten, materials of the eighth transition group of the periodic table, aluminium nitride and/or zirconium dioxide.

3. Process according to Claim 1 or 2, **characterized in that** oxidic, nitridic and/or carbidic ceramic starting materials are used.

4. Process according to any of Claims 1 to 3, **characterized in that** the melt of the ceramic starting materials has a temperature of at least about 1600°C, especially at least about 1900°C.

5. Process according to Claim 3 or 4,
**characterized in that** the ceramic starting material used is aluminium oxide, magnesium oxide, silicon oxide, titanium dioxide, beryllium oxide and/or zirconium oxide.

6. Process according to at least one of the preceding claims, **characterized in that** the die of the mould has a coaxial lumen-former to produce hollow fibres.

7. Process according to Claim 6, **characterized in that** hollow microfibres having a wall thickness of about 0.01 to 15 *µ*m and an outer diameter of about 0.5 to 35 *µ*m are produced by appropriate dimensioning of the die.

8. Ceramic fibres obtainable according to at least one of the preceding claims, **characterized in that** they are single crystal hollow fibres which have a wall thickness of about 0.01 to 15 *µ*m and an outer diameter of about 0.5 to 35 *µ*m.

9. Ceramic fibres according to Claim 8, **characterized in that** the variation in wall thickness and outer diameter is not more than 6%.

10. Use of the ceramic fibres, especially hollow microfibres, according to at least one of the preceding claims for producing piezoceramics, implants, temperature resistant conveyor belts, metal-ceramic composites or other composite materials of construction, reinforcements in building construction, elements in electrorheology, security films, gas-filled films, support materials, incombustible and unrottable paper varieties, the matrix of metal melts or matrix of thin-walled polymer components or of elements for refrigeration, for thermal insulation, for light transmission or for sealings and linings.

## Revendications

1. Procédé de production de fibres céramiques à partir de matière en fusion, **caractérisé en ce qu'**une masse fondue de matières premières matières pour céramique se trouvant à une température d'au moins environ 1150°C est amenée à traverser d'une manière connue la filière d'un outil puis abandonnée à la solidification, et les parties au moins de l'outil qui sont exposées à l'action de la matière en fusion étant réalisées en un matériau qui a un point de fusion au-dessus d'environ 2200°C, qui présente la résistance mécanique nécessaire et qui est stable à la corrosion et la température de la matière en fusion dépassant d'au moins environ 250°C le point de solidification, autrement dit le point de fusion de la matière première pour céramique.

2. Procédé suivant la revendication 1, **caractérisé en ce que** les parties au moins de l'outil qui sont exposées à l'action de la matière fondue sont réalisées en tantale, en tungstène, en éléments du huitième sous-groupe du Système Périodique, en nitrure d'aluminium et/ou en dioxyde de zirconium.

3. Procédé suivant la revendication 1 ou 2, **caractérisé en ce qu'**on utilise des matières premières pour céramique du type d'oxydes, de nitrures et/ou de carbures.

4. Procédé suivant l'une quelconque des revendications 1 à 3, **caractérisé en ce que** la masse fondue de matières premières pour céramique présente une température d'au moins environ 1600°C, notamment d'au moins environ 1900°C.

5. Procédé suivant la revendication 3 ou 4, **caractérisé en ce qu'**on utilise comme matière première pour céramique de l'oxyde d'aluminium, de l'oxyde de magnésium, de l'oxyde de silicium, du dioxyde de titane, de l'oxyde de béryllium et/ou de l'oxyde de zirconium.

6. Procédé suivant au moins l'une des revendications précédentes, **caractérisé en ce que** la filière de l'outil présente un système coaxial à lumières pour la production de fibres creuses.

7. Procédé suivant la revendication 6, **caractérisé en ce que** des microfibres creuses d'une épaisseur de paroi d'environ 0,01 à 15 *µ*m et d'un diamètre extérieur d'environ 0,5 à 35 *µ*m sont produites par dimensionnement adéquat de la filière.

8. Fibres céramiques, obtenues selon au moins l'une des revendications précédentes, **caractérisées en ce qu'**elles sont des fibres creuses monocristallines qui présentent une épaisseur de paroi d'environ 0,01 à 15 *µ*m et un diamètre extérieur d'environ 0,5 à 35 *µ*m.

9. Fibres céramiques suivant la revendication 8, **caractérisées en ce que** la variation de l'épaisseur de paroi et du diamètre extérieur ne s'élève pas à plus de 6 %.

10. Utilisation des fibres céramiques, notamment des microfibres creuses, selon au moins l'une des revendications précédentes, pour la production de piézocéramiques, d'implants, de bandes transporteuses résistant à la chaleur, de composites métal-céramique ou d'autres matériaux composites, d'armatures dans l'industrie du bâtiment, d'éléments en électro-rhéologie, de feuilles de sécurité, de feuilles contenant une charge de gaz, de matières de support, de qualités de papiers non combustibles et inaltérables, de la matrice de métaux en fusion ou de la matrice d'éléments de construction à paroi mince en polymères ou d'éléments pour la production du froid, pour l'isolation thermique, pour le transport de la lumière ou pour des joints et des revêtements.
